# EUROPEAN PATENT APPLICATION

(11) **EP 4 610 608 A1**
(43) Date of publication of application: **03.09.2025**
(21) Application number: 23881877.7
(22) Date of filing: 25.10.2023
(51) Int. Cl.: G01J 5/12, G01J 5/0806, G01V 8/10

(54) **HUMAN BODY POSITION DETECTION METHOD, SYSTEM AND APPARATUS, AND SMART HOME DEVICE**

(30) Priority: 26.10.2022 CN 202211320755
(71) Applicant: Zhengzhou Winsen Electronics Technology Co., Ltd, Zhengzhou, Henan 450001 (CN)
(72) Inventor: TIAN, Yong, Zhengzhou, Henan 450001 (CN); GAO, Guanghui, Zhengzhou, Henan 450001 (CN); HAO, Mingliang, Zhengzhou, Henan 450001 (CN); SUN, Wu, Zhengzhou, Henan 450001 (CN)
(74) Representative: Nordmeyer, Philipp Werner
(86) International application number: PCT/CN2023/126434
(87) International publication number: WO 2024/088300

(57) **Abstract**

A human body position detection method, system and apparatus, and a smart home device. The method comprises: scanning and collecting temperature data of a detection area by using a pyroelectric sensor; selecting the temperature data that is greater than or equal to a minimum temperature threshold and smaller than or equal to a maximum temperature threshold, and connecting the selected temperature data to draw a temperature distribution profile and form n sections; after an interval of time t, scanning and collecting temperature data of the detection area again, selecting the temperature data that is greater than or equal to the minimum temperature threshold and smaller than or equal to the maximum temperature threshold, and connecting the selected temperature data to draw a temperature distribution profile and form n sections; and calculating width differences between the corresponding sections of the temperature data of the two detections, and if a difference is greater than or equal to a width difference threshold, determining that the corresponding section is a person presence section. According to the solution, the determination of whether a person is present is limited not only according to the temperature but also according to whether a target object moves, thereby reducing false determination caused by non-human body heat generation.

## Description

The present application claims the priority of the Chinese Patent Application No. 202211320755.0, titled "HUMAN BODY POSITION DETECTION METHOD, SYSTEM AND APPARATUS, AND SMART HOME DEVICE" filed on October 26, 2022 with the China National Intellectual Property Administration, which is incorporated herein by reference in its entirety.

### FIELD

The present disclosure relates to the technical field of sensors, and in particular to a human body position detection method, system and apparatus, and a smart home device.

### BACKGROUND

With the popularization of science and technology applications and the continuous improvement of people's living standards, people put forward higher requirements for the intelligence of home appliances and pay more attention to human-computer interaction. Human body position detection is a common function of smart home appliances for detecting the specific position of a human body. Based on different positions of the human body, the corresponding functions of smart home appliances exhibit different states. For example, a lamp is selectively turned on or off based on the position of the human body, and an air conditioner or a fan supplies air to the area where the human body is located or avoids supplying air to the area where the human body is located based on the position of the human body. In a vertical air conditioner, an apparatus for detecting the position of a human body is generally composed of a single pyroelectric sensor or multiple arrayed pyroelectric sensors. The measurement by a single sensor is accurate, but its measurement range is limited. Multiple arrayed sensors have a wide detection range, but there is an overlap between detection areas of the sensors, which results in failing to detect the position of the human body accurately. Moreover, determining the position of the human body depending only on temperature may easily lead to false determinations and inaccurate detections.

### SUMMARY

In view of the disadvantages of the conventional technology, an object of the present disclosure is to provide a human body position detection method, system and apparatus, and a smart home device.

In order to achieve the above object, the following technical solutions are provided according to the present disclosure.

According to a first aspect of the present disclosure, a human body position detection method based on a pyroelectric sensor is provided. The method includes:
collecting temperature data of a detection area by scanning the detection area with a pyroelectric sensor; selecting temperature data that is greater than or equal to a minimum temperature threshold and smaller than or equal to a maximum temperature threshold, and connecting the selected temperature data to draw a temperature distribution profile and form n sections, section 1-1, section 1-2, section 1-3, ..., section 1-n; calculating respective widths W1-1, W1-2, W1-3, ..., W1-n of the sections;
after an interval of time t, collecting temperature data of the detection area by scanning the detection area again, selecting temperature data that is greater than or equal to the minimum temperature threshold and smaller than or equal to the maximum temperature threshold, and connecting the selected temperature data to draw a temperature distribution profile and form n sections, section 2-1, section 2-2, section 2-3, ..., section 2-n; calculating respective widths W2-1, W2-2, W2-3, ..., W2-n of the section;
calculating a width difference between corresponding sections of the temperature data of the two detections, where a difference between the width W1-1 and the width W2-1 is C1, a difference between the width W1-2 and the width W2-2 is C2, a difference between the width W1-3 and the width W2-3 is C3, ..., and a difference between the width W1-n and the width W2-n is Cn; and
in response to that the difference Cn is greater than or equal to a width difference threshold, determining that the corresponding section W2-n is a human-present section.

In embodiments, the detection area includes three mutually independent areas A, B, and C obtained by dividing a detection space, the area A is defined by boundary 1 and boundary 2, the area B is defined by boundary 3 and boundary 4, and the area C is defined by boundary 5 and boundary 6, boundary 2 being parallel to boundary 3, and boundary 4 being parallel to boundary 5; and
pyroelectric sensors for sensing a thermal radiation signal within the areas A, B and C are respectively arranged in the areas A, B and C.

In embodiments, when the difference Cn is smaller than the width difference threshold, the human body position detection method based on a pyroelectric sensor further includes:
in response to that the difference Cn is equal to 0 and both the width W1-n and the width W2-n are greater than or equal to a minimum human body width, determining that the corresponding section W2-n is a human-present section.

According to a second aspect of the present disclosure, a human body position detection system based on a pyroelectric sensor is provided. The system includes:
a pyroelectric sensor, configured to collect temperature data of a detection area multiple times at an interval of time t by scanning the detection area;
a data analysis module, connected to the pyroelectric sensor, and configured to select temperature data that is greater than or equal to a minimum temperature threshold and smaller than or equal to a maximum temperature threshold among the temperature data detected each time, connect the selected temperature data to draw a temperature distribution profile, form n sections, and calculate respective widths of the sections; and
a data determination module, connected to the data analysis module, and configured to receive width data, calculate a difference between widths of corresponding sections of the temperature data from adjacent detections, and in response to that the difference is greater than or equal to a width difference threshold, determine that the corresponding section is a human-present section.

In embodiments, the detection area includes three mutually independent areas A, B, and C obtained by dividing a detection space, the area A is defined by boundary 1 and boundary 2, the area B is defined by boundary 3 and boundary 4, and the area C is defined by boundary 5 and boundary 6, boundary 2 being parallel to boundary 3, and boundary 4 being parallel to boundary 5; and
pyroelectric sensors for sensing a thermal radiation signal within the areas A, B and C are respectively arranged in the areas A, B and C.

In embodiments, the data determination module is further configured to: when a difference Cn is smaller than the width difference threshold, in response to that the difference Cn is equal to 0 and both a width W1-n and a width W2-n are greater than or equal to a minimum human body width, determine that a corresponding section W2-n is a human-present section.

According to a third aspect of the present disclosure, a human body position detection apparatus based on a pyroelectric sensor is provided. The apparatus includes: a housing, a lens fixed to a top of the housing, pyroelectric sensors fixed to a bottom of the housing, and a circuit board fixedly connected to the housing; where
the circuit board is provided with the data analysis module and the data determination module in the human body position detection system based on a pyroelectric sensor;
three pyroelectric sensors are arranged in a row, a first pyroelectric sensor and a third pyroelectric sensor respectively at two ends are inclined at an angle, and a second pyroelectric sensor in the middle is placed vertically, to form a sector-shaped detection area;
the lens includes three lenses arranged respectively corresponding to the three pyroelectric sensors; and
a detection boundary limiting baffle is provided between each lens and a corresponding pyroelectric sensor, a left detection boundary of the first pyroelectric sensor serves as boundary 1, a right detection boundary of the first pyroelectric sensor serves as boundary 2, a left detection boundary of the second pyroelectric sensor serves as boundary 3, a right detection boundary of the second pyroelectric sensor serves as boundary 4, a left detection boundary of the third pyroelectric sensor serves as boundary 5, and a right detection boundary of the third pyroelectric sensor serves as boundary 6.

In embodiments, the lens is a Fresnel lens.

In embodiments, the first pyroelectric sensor and the third pyroelectric sensor are arranged symmetrically and inclined at an angle ranging from 45 degrees to 85 degrees.

In embodiments, the circuit board is provided with a positioning hole, the housing is provided with a positioning post for use in conjunction with the positioning hole, and the housing is fixed to the circuit board through a screw.

According to a fourth aspect of the present disclosure, a smart home device is provided. The smart home device includes: a controller, the human body position detection apparatus based on a pyroelectric sensor, and an execution module; where
the controller is connected to the human body position detection apparatus based on a pyroelectric sensor and the execution module, and configured to when the human body position detection apparatus based on a pyroelectric sensor detects a position of a human body, control the execution module to perform a corresponding action.

In embodiments, the execution module is a lamp, an air conditioner, or a fan.

Compared with the conventional technology, the technical solution of the present disclosure has an outstanding substantive feature and a significant progress. Specifically:
1) According to the present disclosure, the determination of whether a human is present is performed not only according to the temperature but also according to whether a target object moves, thereby reducing false determinations caused by non-human body heat generation, and leading to more accurate and reliable position detection.
2) An array of three pyroelectric sensors is employed in the present disclosure for detection, which has a reasonable layout and a wide detection range, is adaptive to more complex and demanding environment, and has a wider range of application.
3) The internal optical path structure of the apparatus of the present disclosure is designed to form three mutually independent detection areas A, B and C. The detected signals within the areas do not interfere with each other, which leads to more accurate detection.
4) A Fresnel lens is added to the front end of the apparatus of the present disclosure to enhance the signals;
5) The apparatus of the present disclosure has a simple overall structure and small volume, and is easy to install and maintain.

### BRIEF DESCRIPTION OF THE DRAWINGS

FIG. 1 is a flowchart illustrating an overall process of a human body position detection method.
FIG. 2 is a temperature profile distribution diagram of a first scanning process.
FIG. 3 is a temperature profile distribution diagram of a scanning after an interval of time t.
FIG. 4 is an appearance view of a human body position detection apparatus.
FIG. 5 is a schematic diagram illustrating the partitioning of a detection area.
FIG. 6 is a schematic diagram illustrating assembly of a human body position detection apparatus.
FIG. 7 is a schematic diagram of an internal optical path design; and
FIG. 8 is a schematic diagram illustrating a layout of pyroelectric sensors.

In the drawings: 1 represents a lens, 2 represents a housing, 3 represents pyroelectric sensors, 4 represents a circuit board, 5 represents a screw, 31 represents a first pyroelectric sensor, 32 represents a second pyroelectric sensor, and 33 represents a third pyroelectric sensor.

### DETAILED DESCRIPTION

Hereinafter, the technical solution of the present disclosure are further described in detail with reference to the specific embodiments.

### Embodiment 1

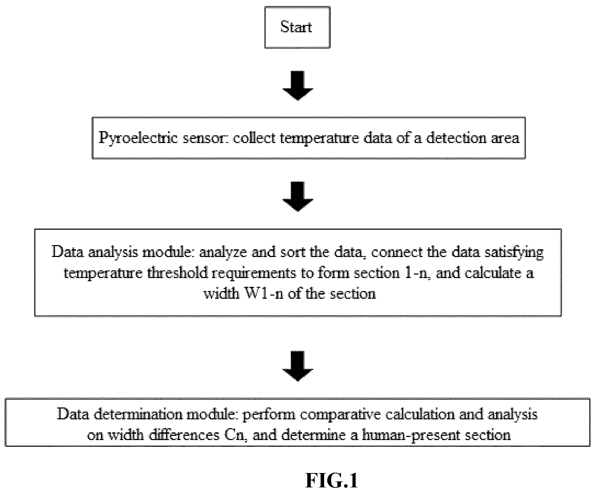

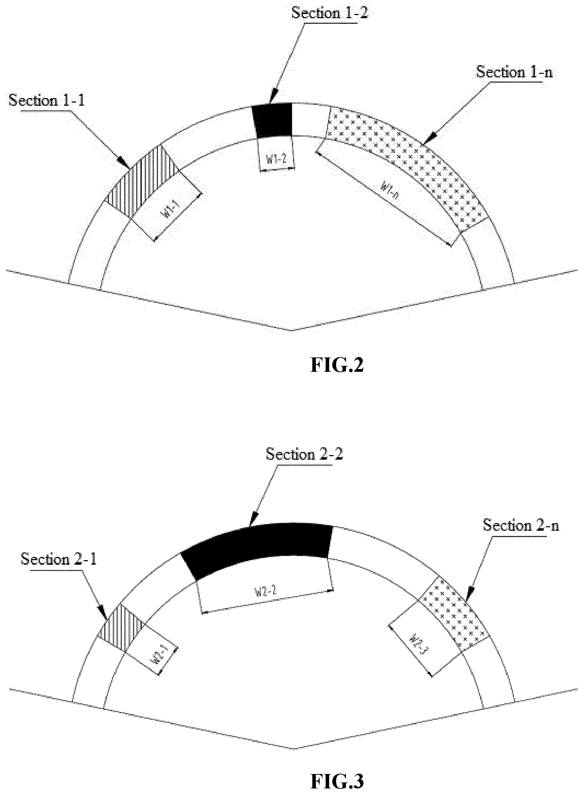

As shown in FIG. 1, a human body position detection method based on a pyroelectric sensor is provided according to the present embodiment. The method includes:
collecting temperature data of a detection area by scanning the detection area with a pyroelectric sensor; selecting temperature data that is greater than or equal to a minimum temperature threshold and smaller than or equal to a maximum temperature threshold, and connecting the selected temperature data to draw a temperature distribution profile and form n sections, section 1-1, section 1-2, section 1-3, ..., section 1-n as shown in FIG. 2; calculating respective widths W1-1, W1-2, W1-3, ..., W1-n of the sections;
after an interval of time t, collecting temperature data of the detection area by scanning the detection area again, selecting temperature data that is greater than or equal to the minimum temperature threshold and smaller than or equal to the maximum temperature threshold, and connecting the selected temperature data to draw a temperature distribution profile and form n sections, section 2-1, section 2-2, section 2-3, ..., section 2-n as shown in FIG. 3; calculating respective widths W2-1, W2-2, W2-3, ..., W2-n of the sections;
calculating a width difference between corresponding sections of the temperature data of the two detections, where a difference between the width W1-1 and the width W2-1 is C1, a difference between the width W1-2 and the width W2-2 is C2, a difference between the width W1-3 and the width W2-3 is C3, ..., and a difference between the width W1-n and the width W2-n is Cn; and
in response to that the difference Cn is greater than or equal to a width difference threshold, determining that the corresponding section W2-n is a human-present section.

It should be noted that, in this embodiment, the minimum temperature threshold may be set to the lowest body temperature value of a normal human body, and the maximum temperature threshold may be set to the highest body temperature value of a normal human body. For the width difference threshold, due to an error in the acquisition accuracy of a pyroelectric sensor and an error in outlining the temperature distribution profile, there is an error in the width values of the sections. Therefore, it is sufficient to set the width difference threshold ≥ the width error. For the interval time t, it can be set in accordance with the requirements of the actual application scenario. For example, in a home application scenario where the flow of people is low and the human-present sections have a concentrated distribution, t can be set within 30s, such that the change can be identified in time after the action of a human to respond accordingly. In a commercial scenario where there is a large flow of people and the human-present section is expansive, t can be set to greater than 30s, such that slight changes will not cause the corresponding device to respond.

Further, when the difference Cn is smaller than the width difference threshold, the human body position detection method based on a pyroelectric sensor may further include: in response to that the difference Cn is equal to 0 and both the width W1-n and the width W2-n are greater than or equal to a minimum human body width, determining that the corresponding section W2-n is a human-present section.

In embodiments, this alternative solution is intended for a scenario where a human remains stationary within the field of view of a thermal imaging device. When a human body remains motionless, the difference Cn between the width W1-n and the width W2-n necessarily is 0. In such case, directly determining that the section W2-n is a human-absent section would inevitably lead to a false determination result. Therefore, it may be further determined whether the width W1-n and the width W2-n are both greater than or both equal to the minimum human body width. If so, it is determined that the section W2-n is a human-present section, and otherwise, it is determined that the section W2-n is a human-absent section. The minimum human body width may be, in embodiments, a temperature section width when the human body is in a sideways position, which may be determined by statistics from a sufficient number of experiments.

### Embodiment 2

A human body position detection system based on a pyroelectric sensor is provided according to the present embodiment. The system includes:
a pyroelectric sensor, configured to collect temperature data of a detection area multiple times at an interval of time t by scanning the detection area;
a data analysis module, connected to the pyroelectric sensor, and configured to select temperature data that is greater than or equal to a minimum temperature threshold and smaller than or equal to a maximum temperature threshold among the temperature data detected each time, connect the selected temperature data to draw a temperature distribution profile, form n sections, and calculate respective widths of the sections; and
a data determination module, connected to the data analysis module, and configured to receive width data and calculate a difference between widths of corresponding sections of the temperature data from adjacent detections, and in response to that the difference is greater than or equal to a width difference threshold, determine that the corresponding section is a human-present section.

Reference can be made to Embodiment 1 for the specific operation process of the modules in the system according to the present embodiment, which is not repeated herein.

### Embodiment 3

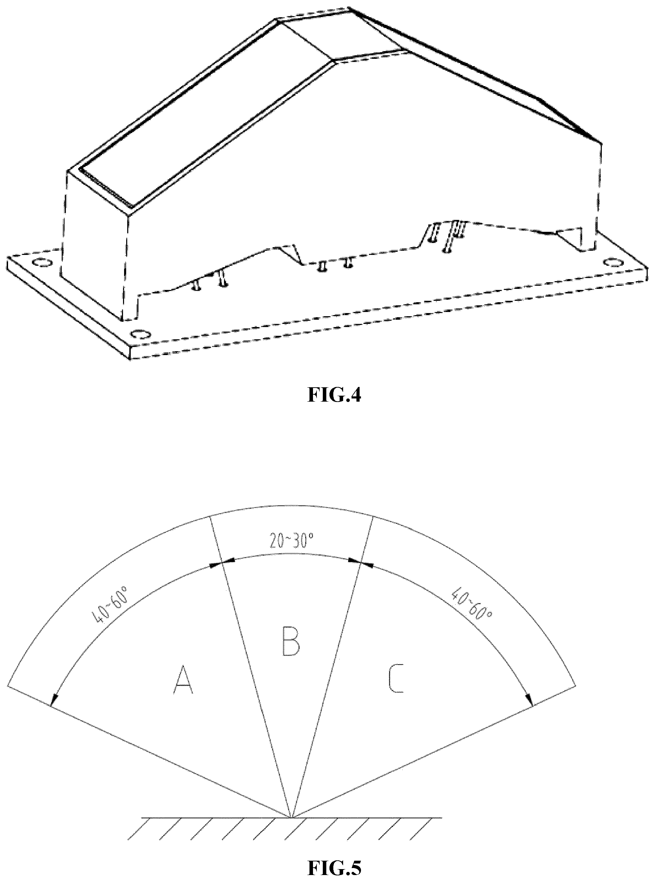

As shown in FIG. 4, a human body position detection apparatus based on a pyroelectric sensor is provided according to the present embodiment. The apparatus includes: a housing 2, a Fresnel lens 1 fixed to a top of the housing 2 by bonding, pressing and screwing or the like, pyroelectric sensors 3 fixed to a bottom of the housing 2 by bonding, fitting and pressing or the like, and a circuit board 4 fixedly connected to the housing 2; where the circuit board 4 is provided with a positioning hole, the housing 2 is provided with a positioning post for use in conjunction with the positioning hole, and the housing 2 is fixed to the circuit board 4 through a screw 5; and the circuit board 4 is provided with the data analysis module and the data determination module in the human body position detection system based on a pyroelectric sensor.

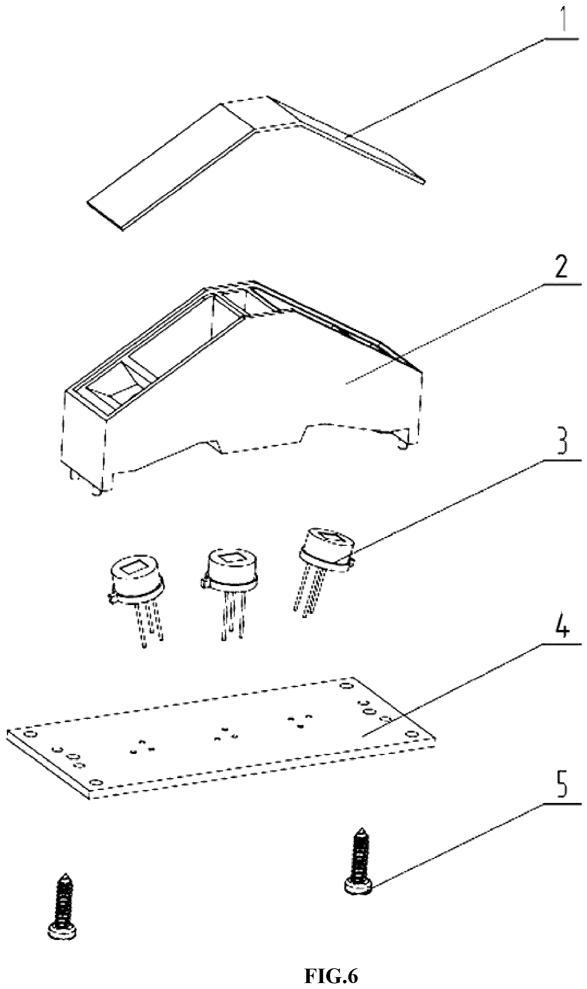

The human body position detection apparatus in this embodiment is designed with three pyroelectric sensors. Through an excellent layout and optical path design, the three pyroelectric sensors respectively form three independent detection areas A, B, and C, as shown in FIG. 5. As a result, the configuration has more accurate detection, simple structure and low cost, and is convenient to install and maintain. The structure is shown in FIG. 6.

The design principle of the internal optical path of the housing 2 is described as follows.

Three pyroelectric sensors are arranged in a row inside the housing 2. A first pyroelectric sensor 31 and a third pyroelectric sensor 33 respectively at two ends are inclined at an angle, and a second pyroelectric sensor 32 in the middle is placed vertically, to form a sector-shaped detection area. The lens 1 includes three lenses. Each lens is arranged corresponding to a respective one of the three pyroelectric sensors. A detection boundary limiting baffle is provided between each lens and a corresponding pyroelectric sensor. A left detection boundary of the first pyroelectric sensor 31 serves as boundary 1. A right detection boundary of the first pyroelectric sensor 31 serves as boundary 2. A left detection boundary of the second pyroelectric sensor 32 serves as boundary 3. A right detection boundary of the second pyroelectric sensor 32serves as boundary 4. A left detection boundary of the third pyroelectric sensor 33 serves as boundary 5. A right detection boundary of the third pyroelectric sensor 33 serves as boundary 6.

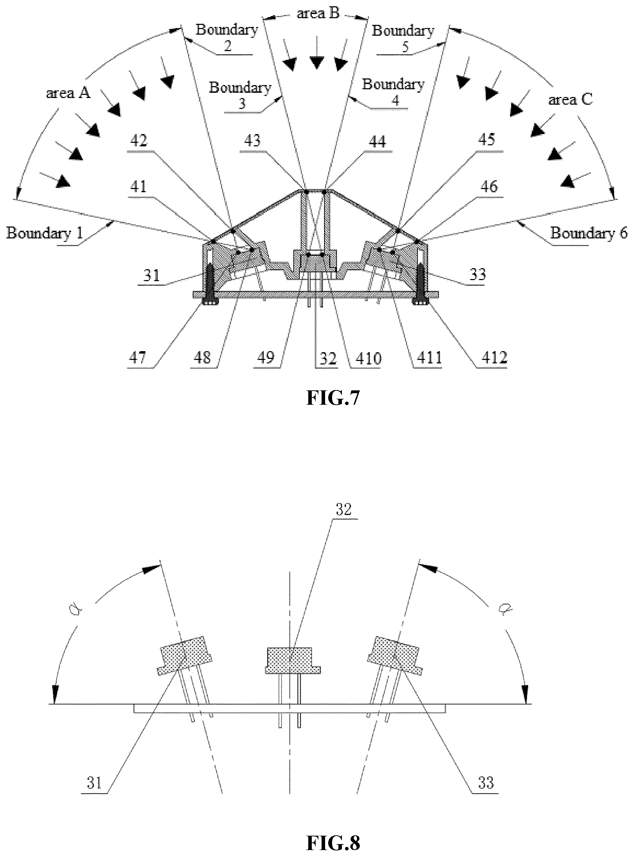

In embodiments, as shown in FIG. 7, boundary 1 is defined by point 41 and point 48. Boundary 2 is defined by point 42 and point 47. Boundary 3 is defined by point 43 and point 410. Boundary 4 is defined by point 44 and point 49. Boundary 5 is defined by point 45 and point 412. Boundary 6 is defined by point 46 and point 411. Area A is defined by boundary 1 and boundary 2. Area B is defined by boundary 3 and boundary 4. Area C is defined by boundary 5 and boundary 6. Boundary 2 is parallel to boundary 3. Boundary 4 is parallel to boundary 5. The first pyroelectric sensor 31 detects a thermal radiation signal in area A. The second pyroelectric sensor 32 detects a thermal radiation signal in area B. The third pyroelectric sensor 33 detects a thermal radiation signal in area C.

An array of the three pyroelectric sensors inside the human body position detection apparatus in this embodiment has a reasonable layout and inclination angles. As shown in FIG. 8, the second pyroelectric sensor 32 is placed vertically. The first pyroelectric sensor 31 and the third pyroelectric sensor 33 are placed symmetrically and inclined at an angle αranging from 45 degrees to 85 degrees. The configuration has a wider detection range, and can adapt to a more complex and demanding environment with a wider range of application.

### Embodiment 4

A smart home device is provided according to the present embodiment. The smart home device includes: a controller, the human body position detection apparatus based on a pyroelectric sensor, and an execution module; where
the controller is connected to the human body position detection apparatus based on a pyroelectric sensor and the execution module, and configured to when the human body position detection apparatus based on a pyroelectric sensor detects a position of a human body, control the execution module to perform a corresponding action.

In embodiments, the execution module is a lamp, an air conditioner, or a fan.

A vertical air conditioner is provided as an example:
1) The human body position detection apparatus in the vertical air conditioner detects temperature data of an area and transmits the temperature data to the data analysis module.
2) The data analysis module analyzes the temperature data and transmits the analyzed data to the data determination module.
3) The data determination module performs a comparative calculation on the data, determines whether each section is a human-present section, and transmits the collected information on one or more human-present sections to the execution module.
4) The execution module sends an instructed action to the air conditioner in accordance with the received information on the human-present section, changes an air direction of the air conditioner, supplies air to the human-present section, and may also increase an air supply volume in accordance with a width of the section.

Finally, it should be noted that, the above embodiments are only provided for describing the technical solutions of the present disclosure rather than limiting the technical solutions. Although the present disclosure is described in detail with reference to the preferred embodiments, those skilled in the art should understand that, modifications may be made to the specific embodiments of the present disclosure, or equivalent substitutions may be made to some technical features in the embodiments without departing from the spirit of the technical solutions of the present disclosure. All the modifications and equivalent substitutions to the present disclosure fall within the protection scope of the claimed technical solutions of the present disclosure.

## Claims

1. A human body position detection method based on a pyroelectric sensor, comprising:
collecting temperature data of a detection area by scanning the detection area with a pyroelectric sensor;
selecting temperature data that is greater than or equal to a minimum temperature threshold and smaller than or equal to a maximum temperature threshold, and connecting the selected temperature data to draw a temperature distribution profile and form n sections, section 1-1, section 1-2, section 1-3, ..., section 1-n;
calculating respective widths W1-1, W1-2, W1-3, ..., W1-n of the sections ;
after an interval of time t, collecting temperature data of the detection area by scanning the detection area again;
selecting temperature data that is greater than or equal to the minimum temperature threshold and smaller than or equal to the maximum temperature threshold, and connecting the selected temperature data to draw a temperature distribution profile and form n sections, section 2-1, section 2-2, section 2-3, ..., section 2-n;
calculating respective widths W2-1, W2-2, W2-3, ..., W2-n of the sections;
calculating a width difference between corresponding sections of the temperature data of the two detections, wherein a difference between the width W1-1 and the width W2-1 is C1, a difference between the width W1-2 and the width W2-2 is C2, a difference between the width W1-3 and the width W2-3 is C3, ..., and a difference between the width W1-n and the width W2-n is Cn; and
in response to that the difference Cn is greater than or equal to a width difference threshold, determining that the corresponding section W2-n is a human-present section.

2. The human body position detection method based on a pyroelectric sensor according to claim 1, wherein: the detection area comprises three mutually independent areas A, B, and C obtained by dividing a detection space, the area A is defined by boundary 1 and boundary 2, the area B is defined by boundary 3 and boundary 4, and the area C is defined by boundary 5 and boundary 6, the boundary 2 being parallel to the boundary 3, and the boundary 4 being parallel to the boundary 5; and
pyroelectric sensors for sensing a thermal radiation signal within the areas A, B and C are respectively arranged in the areas A, B and C.

3. The human body position detection method based on a pyroelectric sensor according to claim 1, wherein when the difference Cn is smaller than the width difference threshold, the method further comprises:
in response to that the difference Cn is equal to 0 and both the width W1-n and the width W2-n are greater than or equal to a minimum human body width, determining that the corresponding section W2-n is a human-present section.

4. A human body position detection system based on a pyroelectric sensor, comprising:
a pyroelectric sensor, configured to collect temperature data of a detection area a plurality of times at an interval of time t by scanning the detection area;
a data analysis module, connected to the pyroelectric sensor, and configured to select temperature data that is greater than or equal to a minimum temperature threshold and smaller than or equal to a maximum temperature threshold among the temperature data detected each time, connect the selected temperature data to draw a temperature distribution profile, form n sections, and calculate respective widths of the sections; and
a data determination module, connected to the data analysis module, and configured to receive width data and calculate a difference between widths of corresponding sections of the temperature data from adjacent detections, and in response to that the difference is greater than or equal to a width difference threshold, determine that the corresponding section is a human-present section.

5. The human body position detection system based on a pyroelectric sensor according to claim 4, wherein: the detection area comprises three mutually independent areas A, B, and C obtained by dividing a detection space, the area A is defined by boundary 1 and boundary 2, the area B is defined by boundary 3 and boundary 4, and the area C is defined by boundary 5 and boundary 6, the boundary 2 being parallel to the boundary 3, and the boundary 4 being parallel to the boundary 5; and
pyroelectric sensors for sensing a thermal radiation signal within the areas A, B and C are respectively arranged in the areas A, B and C.

6. The human body position detection system based on a pyroelectric sensor according to claim 4, wherein the data determination module is further configured to: when a difference Cn is smaller than the width difference threshold, in response to that the difference Cn is equal to 0 and both a width W1-n and a width W2-n are greater than or equal to a minimum human body width, determine that a corresponding section W2-n is a human-present section.

7. A human body position detection apparatus based on a pyroelectric sensor, comprising: a housing, a lens fixed to a top of the housing, a pyroelectric sensor fixed to a bottom of the housing, and a circuit board fixedly connected to the housing; wherein
the circuit board is provided with the data analysis module and the data determination module in the human body position detection system based on a pyroelectric sensor according to claim 4;
three pyroelectric sensors are arranged in a row, a first pyroelectric sensor and a third pyroelectric sensor respectively at two ends are inclined at an angle, and a second pyroelectric sensor in the middle is placed vertically, to form a sector-shaped detection area;
the lens comprises three lenses arranged respectively corresponding to the three pyroelectric sensors; and
a detection boundary limiting baffle is provided between each lens and a corresponding pyroelectric sensor, a left detection boundary of the first pyroelectric sensor serves as boundary 1, a right detection boundary of the first pyroelectric sensor serves as boundary 2, a left detection boundary of the second pyroelectric sensor serves as boundary 3, a right detection boundary of the second pyroelectric sensor serves as boundary 4, a left detection boundary of the third pyroelectric sensor serves as boundary 5, and a right detection boundary of the third pyroelectric sensor serves as boundary 6.

8. The human body position detection apparatus based on a pyroelectric sensor according to claim 7, wherein the lens is a Fresnel lens.

9. The human body position detection system based on a pyroelectric sensor according to claim 7, wherein the first pyroelectric sensor and the third pyroelectric sensor are arranged symmetrically and inclined at an angle ranging from 45 degrees to 85 degrees.

10. The human body position detection apparatus based on a pyroelectric sensor according to claim 7, wherein the circuit board is provided with a positioning hole, the housing is provided with a positioning post for use in conjunction with the positioning hole, and the housing is fixed to the circuit board through a screw.

11. A smart home device, comprising: a controller, the human body position detection apparatus based on a pyroelectric sensor according to any of claims 7 to 10, and an execution module; wherein
the controller is connected to the human body position detection apparatus based on a pyroelectric sensor and the execution module, and configured to control the execution module to perform a corresponding action when the human body position detection apparatus based on a pyroelectric sensor detects the position of a human body.

12. The smart home device according to claim 11, wherein the execution module is a lamp, an air conditioner, or a fan.
